# FASCICULE DE BREVET EUROPEEN

(11) **EP 3 363 890 B1**
(45) Date de publication et mention de la délivrance du brevet: **07.06.2023**
(21) Numéro de dépôt: 18157107.6
(22) Date de dépôt: 16.02.2018
(51) Int. Cl.: C12C 7/06, C12C 13/08, C12C 13/02, C12C 7/22

(54) **DISPOSITIF ET PROCÉDÉ DE TRAITEMENT THERMIQUE DE MOÛT**
VORRICHTUNG UND VERFAHREN ZUR WÄRMEBEHANDLUNG VON MOST
DEVICE AND METHOD FOR THERMAL TREATMENT OF WORT

(30) Priorité: 17.02.2017 BE 201700030
(43) Date de publication de la demande: 22.08.2018
(73) Titulaire: Meura S.A., 7600 Péruwelz (BE)
(72) Inventeur: THIROT, Michel, 7332 Sirault (BE); DE BRACKELEIRE, Christian, 1933 Sterrebeek (BE); HARMEGNIES, Frédérique, 4210 Burdinne (BE)
(74) Mandataire: Office Freylinger

(56) Documents cités:
- EP-A2- 1 264 876
- DE-A1- 19 517 928
- DE-C1- 3 504 500
- DE-U1- 9 217 644
- US-A1- 2009 191 321
- ALVAREZ E ET AL: "Injection of steam into the mashing process as alternative method for the temperature control and low-cost of production", JOURNAL OF FOOD ENGINEERING, BARKING, ESSEX, GB, vol. 43, no. 4, 1 janvier 2000 (2000-01-01), pages 193-196, XP002370395, ISSN: 0260-8774, DOI: 10.1016/S0260-8774(99)00144-2

## Description

### Domaine technique de l'invention

La présente invention concerne un dispositif pour le traitement thermique de moût ainsi qu'un dispositif distributeur apte à être introduit dans ledit dispositif de traitement thermique. La présente invention concerne aussi un procédé pour le traitement thermique de moût, dans les industries brassicoles et de fabrication d'extraits de céréales. Plus précisément l'invention concerne un dispositif de distribution auto-adaptatif du moût dans une cuve munie d'un cuiseur interne ou externe pour l'ébullition du moût.

### Introduction

Un procédé de brassage pour la production de moût comporte généralement les étapes suivantes :
Les matières premières contenant de l'amidon sont préalablement broyées, ou utilisées telles quelles, et mélangées avec de l'eau ; c'est l'opération « d'empâtage » qui conduit à l'obtention de la maische. Au cours du brassage, la maische est portée à différents paliers de température afin de permettre aux enzymes de convertir l'amidon en sucres.

En fin de brassage, la maische est filtrée pour séparer les matières insolubles (drêches) du moût.

Le moût subit ensuite un traitement thermique (préchauffage suivi d'une ébullition). Durant cette étape, du houblon est ajouté au moût, ensuite ce dernier est clarifié avant refroidissement et transfert en fermentation.

Ce procédé peut être réalisé en batch, continu ou semi-continu.

Le traitement thermique du moût a différentes fonctions : évaporation d'une certaine quantité d'eau pour l'obtention de la densité de moût souhaitée, stérilisation, inactivation des enzymes, précipitation de protéines, formation de réductones et des composés de Maillard, formation et évaporation des substances aromatiques indésirables (DMS, aldéhydes ...). C'est une étape complexe dans la production de la bière qui influence ses qualités organoleptiques et la stabilité de la mousse.

### Arrière-plan de l'invention

Sur le marché, on distingue de nombreuses technologies pour l'ébullition du moût visant à optimiser l'efficacité de l'évaporation et la qualité du produit fini tout en minimisant la consommation d'énergie thermique.

Les cuves d'ébullition actuelles sont habituellement munies d'un échangeur de chaleur, interne ou externe à la cuve, communément appelé « cuiseur ». Le cuiseur est un échangeur de chaleur tubulaire, alimenté en vapeur d'un côté, et à l'intérieur duquel le moût circule par pompage en puisant l'énergie thermique apportée par le transfert de chaleur vapeur/parois.

Le moût en sortie du cuiseur est guidé dans une tubulure qui s'élève verticalement au-dessus de la surface de moût et se termine par une pièce de distribution éjectant le moût dans la cuve.

Le principe du distributeur ou déflecteur est de projeter au-dessus du niveau du moût, un voile mince de moût en forme d'« ombrelle », de manière à réaliser une large surface d'échange pour l'évaporation de substances volatiles.

Ce système est notamment illustré dans les documents DE-4304383 C1, EP 0 605 781 B1, US 6,968,773 B1 et US 7,781,000 B2.

Sur les fig. de DE-4304383-C1, on peut voir une cuve de traitement thermique (10) comportant un échangeur de chaleur interne (12). Par le chauffage de l'échangeur de chaleur, le moût s'élève vers le haut à partir du fond de la cuve, dans le tube (19), jusqu'à un écran déflecteur (20) situé au-dessus du niveau du moût. Le moût est alors renvoyé vers le bas et retombe dans la cuve en formant un cône (21). Le système comporte également une tuyauterie (24) avec une pompe (29) pour la recirculation forcée du moût.

US 7,781,000 B2, décrit également une cuve d'ébullition munie d'un cuiseur interne. Un circuit de recirculation forcée du moût comporte un segment central qui débouche au-dessus du niveau du moût. Le système comporte un dispositif de répartition en fin film qui renvoie le flux de moût ascendant vers la cuve. De cette manière un échange de composés volatils s'opère entre le film de moût et la vapeur d'eau issue du volume de moût présent dans la cuve.

Dans US 6,968,773 B1, le moût s'écoule sur un support. Il n'y a pas d'écran déflecteur.

Le dispositif décrit dans EP 0 605 781 B1, comporte deux écrans déflecteurs espacés d'une distance réglable.

EP 1 264 876 A2 décrit également une cuve d'ébullition munie d'un dispositif distributeur avec ouverture circonférentielle qui projette le moût en fin film. Si la hauteur de l'écran répartiteur de moût (6) peut être changée, ni cette hauteur, ni l'ouverture circonférentielle n'est modifiable de manière autonome. Ces modifications nécessitent le traitement mathématique ou statistique de données mesurées. L'écran répartiteur n'est pas flottant, sa hauteur est ajustée sur base des résultats du traitement de données mesurées, au moyen d'un dispositif d'entrainement électrique, pneumatique ou hydraulique.

DE 35 04 500 C décrit un dispositif similaire qui a recourt, tout comme celui décrit dans EP 1 264 876, à un système complexe avec une boucle de régulation basée sur une prise de mesures par des capteurs (30). Ce système n'est pas autorégulant de façon autonome. La modification de la hauteur de l'ouverture circonférentielle peut se faire par exemple à l'aide de broches filetées (25) qui doivent être réglées manuellement ou à l'aide de servomoteurs pouvant être commandés par un capteur de pression situé dans l'espace de retenue (20).

Dans ce type de procédé d'ébullition avec cuiseur, on comprend l'importance du dispositif de distribution de moût à différents points de vue.

Le rôle principal est la formation d'un fin film de moût présentant une surface maximale pour permettre l'élimination des volatiles indésirables du moût (effet de stripping).

L'endroit de chute du moût dans la cuve dépend de la forme et de la hauteur du dispositif de distribution ainsi que de la vitesse de sortie du moût du distributeur. Cet endroit de chute joue un rôle sur la formation de la mousse.

Pour un distributeur de section donnée, cette vitesse est déterminée par le débit de moût fixé par la pompe de recirculation et le taux d'évaporation issu de l'énergie introduite dans le système, par exemple via le cuiseur. Cette énergie introduite génère un dégagement de vapeur d'eau en sortie du distributeur.

Le débit de moût à travers la pompe de recirculation est calculé pour assurer un renouvellement de x fois le volume de moût sur la durée totale de l'ébullition. Il est habituel de considérer un renouvellement de 8 à 10 fois le volume de moût sur une heure d'ébullition. On obtient ainsi un débit appelé nominal.

Le retour d'expérience montre que pour un réglage donné du distributeur, l'effet film du moût en forme d'ombrelle parfaite ne peut avoir lieu qu'avec la combinaison d'un débit hydraulique (via la pompe) et d'un débit de gaz, en particulier la vapeur introduite dans le cuiseur.

Le débit volumique de vapeur étant prépondérant par rapport au débit volumique de moût, c'est ce débit de vapeur qui conditionne le bon fonctionnement du système pour un réglage déterminé du taux d'évaporation. A titre d'exemple, pour un débit volumique de moût de 100 m³/h, un taux d'évaporation de 1% requiert un débit de vapeur de 169 m³/h tandis qu'un taux d'évaporation de 8% requiert un débit de vapeur de 1365m³/h.

Par conséquent, avec les dispositifs d'ébullition selon l'état de la technique, munis d'un distributeur de moût donné, une certaine flexibilité sur les paramètres de fonctionnement est possible mais reste limitée.

En cas de modification significative de la recette de brassage, au niveau du volume de brassin et par conséquent du débit de moût ou du taux d'évaporation requis, le réglage du dispositif de distribution, voire sa conception, doivent être modifiés par l'intervention d'un opérateur ou par prise de mesures nécessitant des capteurs et une régulation contrôlant un dispositif d'entraînement électrique, pneumatique ou hydraulique.

Les brasseries voyant leur production de plus en plus se globaliser, l'homme de métier est confronté à la problématique de devoir réaliser de multiples recettes de brassage avec un même équipement limité en flexibilité.

En outre, les dispositifs distributeurs de l'état de la technique sont encombrants. Leurs dimensions ne permettent pas de les introduire en une pièce, dans la cuve de traitement thermique par le trou d'homme. Ils doivent donc être assemblés à l'intérieur de la cuve.

### Résumé de l'invention

La présente invention a pour objectif de fournir un dispositif de distribution de moût qui s'auto-adapte directement, de manière autonome, sans intervention d'un opérateur, et sans prise de mesures ni au moyen de commande électrique, pneumatique ou hydraulique. Le dispositif selon l'invention permet la formation d'un film de moût optimal dans des conditions opératoires variables, dans une gamme de 1 à 2 fois du débit nominal de recirculation du moût, et en combinaison avec des taux d'évaporation allant jusqu'à 12%.

L'objet de l'invention est un dispositif pour le traitement thermique du moût qui comporte une cuve d'ébullition contenant un certain volume de moût, un circuit de recirculation forcée du moût, de préférence un échangeur de chaleur, interne ou externe à la cuve d'ébullition, le circuit de recirculation comportant un conduit vertical dans l'enceinte de la cuve dont la partie supérieure émerge au-dessus de la surface du moût, le dispositif comportant au-dessus du conduit vertical, un distributeur avec une ouverture circonférentielle ; un flux de moût (en particulier moût combiné à la vapeur) étant apte à circuler de manière ascendante dans le conduit vertical et à être éjecté dans la cuve par l'ouverture circonférentielle en particulier en forme d'ombrelle ; le dispositif étant caractérisé en ce que le distributeur comporte une partie supérieure flottante ici nommée flotteur, apte à coulisser le long d'un axe vertical, le flotteur étant soumis à une pression ascendante exercée par le moût ; le dispositif comportant une pièce qui exerce une contre-pression descendante sur le flotteur de telle sorte que la dimension de l'ouverture circonférentielle est auto-modifiable en fonction des conditions opératoires, sans intervention manuelle, ni prise de mesures.

En particulier, la dimension de l'ouverture circonférentielle s'auto-adapte au débit (débit nominal moût + vapeur) circulant dans le tube vertical grâce à la contre-pression qui s'oppose instantanément à la pression dynamique du moût

En particulier, l'axe vertical est muni d'un ressort de contre-pression, placé au-dessus du flotteur.

La contre-pression exercée par le ressort permet d'adapter de façon autonome et instantanée la position du flotteur pour maintenir, à tous moments, une pression constante en sortie du distributeur.

L'objet de l'invention est également un dispositif distributeur apte à être introduit dans une cuve d'ébullition du moût par un trou d'homme.

Un autre objet de l'invention est aussi un procédé pour le traitement thermique du moût dans une cuve d'ébullition comportant une paroi verticale, un circuit de recirculation forcée du moût; le circuit de recirculation comportant un conduit vertical dans l'enceinte de la cuve dont la partie supérieure émerge au-dessus de la surface du moût, le dispositif comportant au-dessus du conduit vertical, un distributeur avec une ouverture circonférentielle et un flotteur apte à coulisser le long d'un axe vertical ; le procédé étant caractérisé en ce qu'un flux de moût circule de manière ascendante dans le conduit vertical et est projeté par l'ouverture circonférentielle du distributeur sur la paroi verticale de la cuve, au-dessus de la surface du moût.

Des modes de réalisation avantageux sont décrits dans les sous-revendications.

### Brève description des figures

D'autres aspects de l'invention seront clarifiés dans la description détaillée de modes de réalisation particuliers de l'invention, référence étant faite aux figures, dans lesquelles :
La fig. 1 est une vue globale d'un dispositif de traitement thermique du moût selon un premier mode d'exécution de l'invention, avec un cuiseur externe.
La fig. 2 est une vue globale d'un dispositif de traitement thermique du moût selon un deuxième mode d'exécution de l'invention, avec un cuiseur interne.
La fig. 3 est une vue de détail d'un dispositif distributeur au repos.
La fig. 4 est une vue de détail du même dispositif distributeur en action.

### Description détaillée d'un mode de réalisation particulier de l'invention

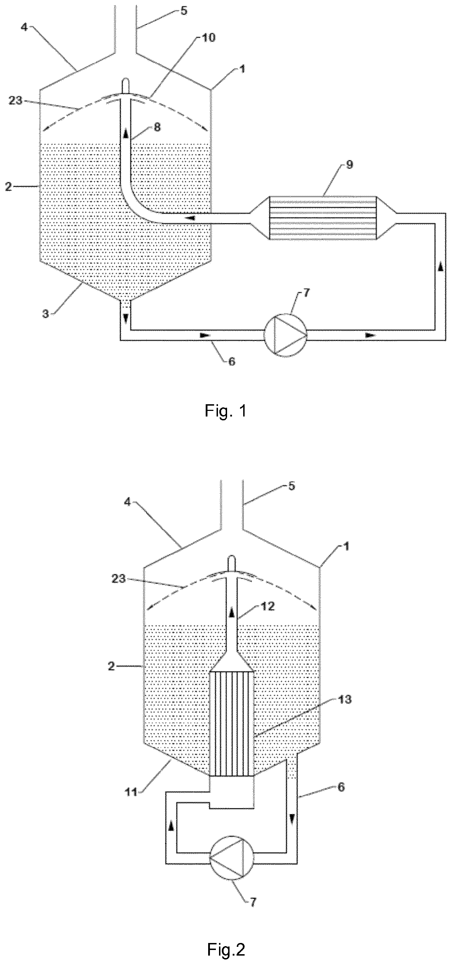

La fig.1 montre un dispositif de traitement thermique du moût comportant une cuve d'ébullition 1 constituée d'une paroi verticale 2, d'un fond 3, et d'une paroi supérieure 4 ouverte sur une cheminée 5. Un circuit de recirculation du moût est composé d'une tuyauterie extérieure 6 partant du fond 3 de la cuve, d'une pompe 7 et d'une tuyauterie intérieure 8 dont l'extrémité verticale supérieure émerge au-dessus du le niveau de moût dans la cuve 1. Un cuiseur ou échangeur de chaleur 9 est disposé sur la tuyauterie extérieure 6 pour le chauffage du moût. Un dispositif de distribution du moût 10 est fixé sur la partie supérieure de la tuyauterie intérieure 8.

La fig.2 montre un autre type de dispositif de traitement thermique du moût comportant une cuve d'ébullition 1 constituée d'une paroi verticale 2, d'une paroi de fond 11 et d'une paroi supérieure 4 ouverte sur une cheminée 5. Un circuit de recirculation du moût est composé d'une tuyauterie extérieure 6 partant de la paroi de fond 11, d'une pompe 7 et d'un conduit vertical 12 intérieur à la cuve 1 dont l'extrémité verticale supérieure émerge du niveau du moût dans la cuve 1. Un cuiseur ou échangeur de chaleur 13 est disposé sur le conduit intérieur 12 pour le chauffage du moût. Un dispositif de distribution du moût est fixé sur la partie supérieure du conduit intérieur 12.

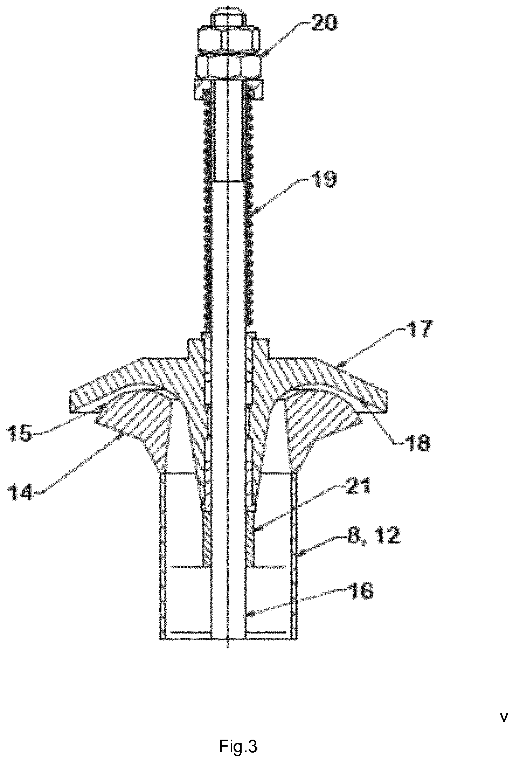

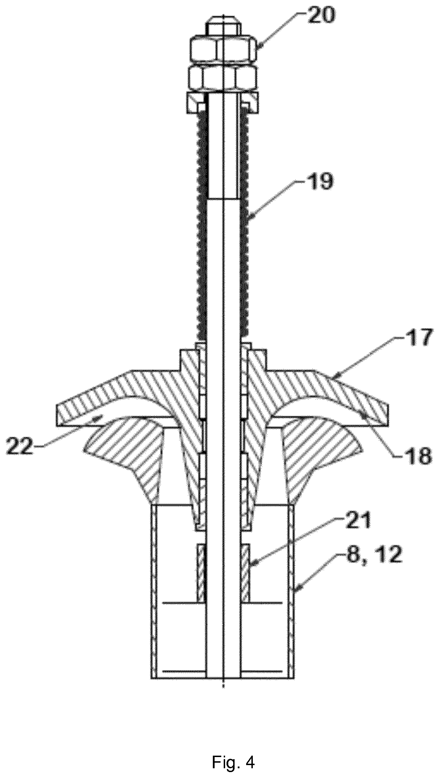

Les fig. 3 et 4 montrent en détail le dispositif 10 de distribution du moût.

Le dispositif de distribution 10 comporte une base circulaire 14 fixée sur la partie supérieure de la tuyauterie intérieure 8 ou du conduit intérieur 12. La face supérieure de la base circulaire 14 présente une surface incurvée 15 sur toute la circonférence. Au centre de cette base circulaire 14 passe un axe central 16 le long duquel peut coulisser une pièce en forme de cône 17, appelée flotteur, dont la face inférieure 18 présente une surface incurvée sur toute la circonférence. Un ressort 19 surmonte le flotteur 17. Un ensemble écrou/contre-écrou 20 fixe la partie supérieure du ressort 19.

Lorsqu'il n'y a aucune circulation de moût au travers du dispositif de distribution 10, le système est dit au repos (fig.3). Le flotteur 17, soumis à la pression du ressort 19, repose alors sur une butée 21 solidaire de l'axe central 16 de manière à créer un écartement minimum entre les surfaces incurvées 15 et 18. Le niveau d'écartement minimum peut être réglé en modifiant la longueur de la butée 21.

Lorsque du moût est envoyé de manière ascendante dans la tuyauterie intérieure 8 ou dans le conduit intérieur 12, il exerce une pression verticale orientée vers le haut sur le flotteur 17 qui remonte le long de l'axe 16, ménageant ainsi une ouverture circonférentielle 22 entre les surfaces incurvées 15 et 18 (fig. 4). Lorsque le moût sort du dispositif de distribution 10 par cette ouverture circonférentielle 22, il est dirigé de manière à être éjecté sous forme d'un fin film en ombrelle 23 sur la paroi verticale 2 de la cuve d'ébullition 1. L'ombrelle forme une large surface permettant l'évaporation d'une partie du moût et l'élimination efficace de substances volatiles indésirables.

Lors d'une augmentation du débit de circulation total (moût + vapeur), la force plus importante exercée sur le flotteur 17 accentue l'écartement entre les surfaces incurvées 15 et 18, permettant une plus grande ouverture de l'ouverture circonférentielle 22 pour l'éjection du moût. A l'inverse, une diminution du débit de circulation du moût engendre une réduction de la force exercée par le moût sur le flotteur 17. La force opposée appliquée par le ressort 19 va auto-adapter la position du flotteur 17 à tous moments, de manière autonome et directe et sans mesure préalable de paramètre et le faire descendre le long de l'axe central 16, avec pour conséquences une diminution de l'écartement entre les surfaces incurvées 15 et 18 et une ouverture plus faible de l'ouverture circonférentielle 22.

L'ensemble écrou/contre-écrou 20 permet de régler la compression du ressort 19 et d'ainsi modifier la pression exercée par celui-ci sur le flotteur 17 pour maintenir une ouverture circonférentielle 22 permettant l'éjection du moût sous forme d'un fin film 23 dans toutes les conditions de fonctionnement.

Les courbures de la face supérieure 15 de la base 14 et de la face inférieure 18 du flotteur 17 seront adaptées par l'homme du métier de manière à obtenir une vitesse optimale à la sortie du distributeur.

La vitesse optimale ainsi obtenue à la sortie du dispositif, permet au moût de former un film en forme d'ombrelle parfaite à tout moment et pour une plage de paramètres de fonctionnement large.

Afin d'obtenir le point de chute du moût dans la cuve recherché, l'homme du métier adaptera la vitesse optimale ainsi que la forme du distributeur, et la hauteur à laquelle le conduit intérieur émerge au-dessus du niveau du moût.

Le diamètre du dispositif distributeur (10) est tel qu'il peut être introduit d'une seule pièce dans les cuves d'ébullition, par une ouverture, généralement appelée porte trou d'homme. Le diamètre classique de ces portes est généralement de 50 à 60 cm. Ceci a l'avantage, que le dispositif peut être fourni avec des cuves d'ébullition nouvelles ou introduit d'une seule pièce dans des cuves d'ébullition existantes sans nécessiter d'assemblage à l'intérieure de la cuve.

### Exemples de réalisation

### Exemple 1

450 L de moût à 14,5°Plato, préalablement préchauffés, de 78°C à 100°C ont été soumis à une ébullition d'une heure au sein d'une cuve d'ébullition équipée d'un cuiseur externe et d'un condenseur de buée, en maintenant une température de 100°C au sein de la cuve tout au long de l'ébullition. Des houblons en pellets ont été ajoutés au moût en début d'ébullition après ajustement du pH à 5,1. La vapeur utilisée pour chauffer le moût au sein du cuiseur externe a été réglée à une pression d'1 bar, et le débit de vapeur entrant dans le cuiseur a été fixé de manière à atteindre 25 % de la capacité maximale de chauffe. La pompe permettant la circulation du moût a été réglée dans le but de recirculer 10 fois le contenu de la cuve sur l'heure d'ébullition (4,5 m³/h). Des échantillons de moût ont été prélevés au début et en fin d'ébullition et leur densité a été mesurée. Le rapport des densités obtenues permet de calculer le pourcentage d'évaporation effectif. Les résultats montrent qu'en travaillant dans ces conditions, le taux d'évaporation est de 3,4 %.

### Exemple 2

Les mêmes conditions expérimentales que celles utilisées pour l'exemple 1 ont été appliquées pour l'exemple 2. La seule modification concerne le débit de vapeur apporté au cuiseur externe, fixé de manière à atteindre 75 % de la capacité maximale de chauffe. Les mesures de densité permettent de mettre en évidence un pourcentage d'évaporation de 7,7 % en travaillant dans ces conditions.

### Exemple 3

Pour illustrer au mieux la flexibilité de fonctionnement du dispositif de distribution auto-adaptatif de moût, l'exemple 3 reprend les conditions expérimentales de l'exemple 1 mais en réduisant le débit de vapeur apporté au cuiseur externe à 10 % de sa valeur maximale, et en réduisant le débit de recirculation (5 fois le contenu de la cuve sur l'heure - 2,25 m³/h). Les résultats indiquent un taux d'évaporation de 1 % en travaillant dans ces conditions expérimentales.

Ces exemples issus d'essais pilotes ont permis d'observer la formation d'une ombrelle parfaite en sortie du distributeur de moût, pour des taux d'évaporation variables entre 1 et 7,7 %, et des débits horaires de moût équivalents à une recirculation de 5 à 10 fois le volume de moût contenu dans la cuve d'ébullition.

## Revendications

1. Dispositif pour le traitement thermique de moût comportant une cuve d'ébullition (1) contenant un certain volume de moût, un circuit de recirculation forcée du moût, le circuit de recirculation comportant un conduit vertical (8, 12) dans l'enceinte de la cuve (1) dont la partie supérieure émerge au-dessus de la surface du moût, le dispositif comportant au-dessus du conduit vertical (8,12), un distributeur (10) avec une ouverture circonférentielle (22), un flux de moût étant apte à circuler de manière ascendante dans le conduit vertical (8, 12) et à être éjecté dans la cuve (1) par l'ouverture circonférentielle (22); le dispositif étant **caractérisé en ce que** le distributeur (10) comporte une pièce flottante, appelée flotteur (17) apte à coulisser le long d'un axe vertical (16), le flotteur (17) est soumis à une pression ascendante exercée par le moût ; le dispositif comportant une pièce (19) qui exerce une contre-pression descendante sur le flotteur (17) de telle sorte que la dimension de l'ouverture circonférentielle (22) est auto-modifiable en fonction des conditions opératoires, sans intervention manuelle, ni prise de mesures.

2. Dispositif pour le traitement thermique du moût selon la revendication précédente, **caractérisé en ce que** le distributeur (10) comporte une base circulaire (14) fixée à l'extrémité supérieure du conduit vertical (16) de telle sorte que l'ouverture circonférentielle (22) soit ménagée entre la base (14)et le flotteur (17).

3. Dispositif pour le traitement thermique du moût selon la revendication précédente, **caractérisé en ce que** la base (14) présente une face supérieure incurvée (15) sur toute sa circonférence.

4. Dispositif pour le traitement thermique du moût selon l'une quelconque des revendications précédentes, **caractérisé en ce que** le flotteur (17) présente une face inférieure incurvée (18) sur toute sa circonférence.

5. Dispositif pour le traitement thermique du moût selon l'une quelconque des revendications 2 à 4, **caractérisé en ce que** la cuve (1) comporte une paroi verticale (2), les faces incurvées (15, 18) du flotteur (17) et de la base (14) étant telles que le flux de moût sortant de l'ouverture circonférentielle (22) retombe sur la paroi verticale (2) de la cuve (1), au-dessus de la surface du moût.

6. Dispositif pour le traitement thermique du moût selon l'une quelconque des revendications précédentes, **caractérisé en ce que** le distributeur (10) est surmonté d'un ressort (19) apte à exercer une pression sur le flotteur (17), dirigée verticalement vers le bas et s'opposant à la pression qu'exerce le flux ascendant sur le flotteur (17).

7. Dispositif pour le traitement thermique du moût selon l'une quelconque des revendications précédentes, **caractérisé en ce qu'**il comporte un échangeur de chaleur, interne (13) ou externe (9) .

8. Dispositif distributeur (10) apte à être introduit dans un dispositif de traitement thermique du moût comportant un circuit de recirculation forcée du moût, le dispositif distributeur comportant une base circulaire (14), un axe central (16) passant au centre de cette base (14), le long duquel une pièce circulaire, appelée flotteur (17) est apte à coulisser, et dont la face inférieure (18) présente une surface incurvée sur toute la circonférence, une ouverture circonférentielle est ménagée entre la base (14) et le flotteur (17) ; le flotteur étant soumis à une pression ascendante exercée par le moût ; le dispositif distributeur comportant une pièce (19) qui exerce une contre-pression descendante sur le flotteur (17) de telle sorte que la dimension de l'ouverture circonférentielle (22) est auto-modifiable en fonction des conditions opératoires, sans intervention manuelle, ni prise de mesures.

9. Dispositif distributeur selon la revendication précédente, **caractérisé en ce que** la face supérieure (15) de la base circulaire (14) présente une surface incurvée sur toute sa circonférence.

10. Procédé pour le traitement thermique du moût dans une cuve d'ébullition (1) comportant une paroi verticale (2) et un circuit de recirculation forcée du moût ; le circuit de recirculation comportant un conduit vertical (8, 12) dans l'enceinte de la cuve (1) dont la partie supérieure émerge au-dessus de la surface du moût, et est surmontée d'un distributeur (10) avec une ouverture circonférentielle (22) et un flotteur (17) apte à coulisser le long d'un axe vertical (16); le procédé étant **caractérisé en ce qu'**un flux de moût circule de manière ascendante dans le conduit vertical (8, 12) et exerce une pression dynamique ascendante sur le flotteur (17), le flotteur étant soumis à une contre-pression descendante qui s'oppose instantanément à la pression dynamique du moût, le flux de moût étant projeté par l'ouverture circonférentielle (22) du distributeur (10) sur la paroi verticale (2) de la cuve (1), au-dessus de la surface du moût.

11. Procédé suivant la revendication précédente **caractérisé en ce qu'**un volume équivalent à 5 à 12 fois le volume de moût contenu dans la cuve, recircule dans le circuit de recirculation sur une heure d'ébullition.

12. Procédé suivant l'une quelconque des revendications 10 et 11, **caractérisé en ce que** de l'énergie est introduite dans un échangeur de chaleur (9, 13).

13. Procédé suivant la revendication précédente, **caractérisé en ce que** l'énergie introduite dans l'échangeur de chaleur (9, 13) est paramétrée pour obtenir un taux d'évaporation de maximum 12%, de préférence compris entre 1 et 8 %.

14. Procédé selon l'une quelconque des revendications 10 à 13, **caractérisé en ce que** le moût est maintenu dans un dispositif d'ébullition selon l'une quelconque des revendications 1 à 7, pendant un temps de résidence compris entre 20 et 80 min, de préférence compris entre 30 et 70 min.

## Patentansprüche

1. Vorrichtung zur Wärmebehandlung von Most, umfassend einen Siedebehälter (1), der ein bestimmtes Mostvolumen enthält, einen Zwangsumwälzkreislauf des Mosts, wobei der Umwälzkreislauf eine vertikale Leitung (8, 12) umfasst, im Inneren des Behälters (1), deren oberer Teil sich über die Oberfläche des Mosts erhebt, wobei die Vorrichtung über der vertikalen Leitung (8, 12) einen Verteiler (10) mit einer Umfangsöffnung (22) umfasst, wobei ein Moststrom ausgelegt ist, um auf aufsteigende Weise in der vertikalen Leitung (8, 12) zu zirkulieren und in den Behälter (1) durch die Umfangsöffnung (22) ausgestoßen zu werden; wobei die Vorrichtung **dadurch gekennzeichnet ist, dass** der Verteiler (10) einen schwimmenden Teil umfasst, bezeichnet als Schwimmer (17), der ausgelegt ist, um entlang einer vertikalen Achse (16) zu gleiten, wobei der Schwimmer (17) einem aufsteigenden Druck unterworfen ist, der vom Most ausgeübt wird; wobei die Vorrichtung einen Teil (19) umfasst, der einen absteigenden Gegendruck auf den Schwimmer (17) ausübt, so dass die Abmessung der Umfangsöffnung (22) in Funktion der Betriebsbedingungen, ohne manuelles Eingreifen oder Messvorgang selbstmodifizierend ist.

2. Vorrichtung zur Wärmebehandlung von Most nach dem vorhergehenden Anspruch, **dadurch gekennzeichnet, dass** der Verteiler (10) eine kreisförmige Basis (14) umfasst, die an das obere Ende der vertikalen Leitung (16) befestigt ist, so dass die Umfangsöffnung (22) zwischen der Basis (14) und dem Schwimmer (17) angeordnet ist.

3. Vorrichtung zur Wärmebehandlung von Most nach dem vorhergehenden Anspruch, **dadurch gekennzeichnet, dass** die Basis (14) eine gekrümmte obere Seite (15) auf ihrem gesamten Umfang aufweist.

4. Vorrichtung zur Wärmebehandlung von Most nach irgendeinem der vorhergehenden Ansprüche, **dadurch gekennzeichnet, dass** der Schwimmer (17) eine untere gekrümmte Seite (18) auf seinem gesamten Umfang aufweist.

5. Vorrichtung zur Wärmebehandlung des Mosts nach irgendeinem der Ansprüche 2 bis 4, **dadurch gekennzeichnet, dass** der Behälter (1) eine vertikale Wand (2) umfasst, wobei die gekrümmten Seiten (15, 18) des Schwimmers (17) und der Basis (14) derart sind, dass der Moststrom, der aus der Umfangsöffnung (22) austritt, auf die vertikale Wand (2) des Behälters (1) über der Oberfläche des Mosts fällt.

6. Vorrichtung zur Wärmebehandlung des Mosts nach irgendeinem der vorhergehenden Ansprüche, **dadurch gekennzeichnet, dass** sich über dem Verteiler (10) eine Feder (19) befindet, die ausgelegt ist, um einen Druck auf den Schwimmer (17) auszuüben, der vertikal nach unten gerichtet ist, und sich dem Druck entgegenstellt, den der aufsteigende Strom auf den Schwimmer (17) ausübt.

7. Vorrichtung zur Wärmebehandlung des Mosts nach irgendeinem der vorhergehenden Ansprüche, **dadurch gekennzeichnet, dass** sie einen internen (13) oder externen (9) Wärmetauscher umfasst.

8. Verteilervorrichtung (10), die ausgelegt ist, um in eine Vorrichtung zur thermischen Behandlung des Mosts eingeführt zu werden, die einen Zwangsumwälzkreislauf des Mosts umfasst, wobei die Verteilervorrichtung eine kreisförmige Basis (14) umfasst, wobei eine mittlere Achse (16) in der Mitte dieser Basis (14) verläuft, entlang deren ein kreisförmiger Teil, genannt Schwimmer (17), ausgelegt ist, um zu gleiten, und deren untere Seite (18) eine gekrümmte Oberfläche auf dem gesamten Umfang aufweist, wobei eine Umfangsöffnung zwischen der Basis (14) und dem Schwimmer (17) angeordnet ist; wobei der Schwimmer einem aufsteigenden Druck unterworfen ist, der vom Most ausgeübt wird; wobei die Verteilervorrichtung einen Teil (19) umfasst, der einen absteigenden Gegendruck auf den Schwimmer (17) ausübt, so dass die Abmessung der Umfangsöffnung (22) in Funktion der Betriebsbedingungen, ohne manuelles Eingreifen oder Messvorgang, selbstmodifizierend ist.

9. Verteilervorrichtung nach dem vorhergehenden Anspruch, **dadurch gekennzeichnet, dass** die obere Seite (15) der kreisförmigen Basis (14) eine gekrümmte Oberfläche auf ihrem gesamten Umfang aufweist.

10. Verfahren zur thermischen Behandlung des Mosts in einem Siedebehälter (1), umfassend eine vertikale Wand (2) und einen Zwangsumwälzkreislauf des Mosts; wobei der Umwälzkreislauf eine vertikale Leitung (8, 12) im Inneren des Behälters (1) umfasst, deren oberer Teil sich über die Oberfläche des Mosts erhebt, und über der ein Verteiler (10) mit einer Umfangsöffnung (22) und einem Schwimmer (17) angeordnet ist, der ausgelegt ist, um entlang einer vertikalen Achse (16) zu gleiten; wobei das Verfahren **dadurch gekennzeichnet ist, dass** ein Strom des Mosts auf aufsteigende Weise in der vertikalen Leitung (8, 12) zirkuliert und einen aufsteigenden dynamischen Druck auf den Schwimmer (17) ausübt, wobei der Schwimmer einem absteigenden Gegendruck ausgesetzt ist, der sich unmittelbar dem dynamischen Druck des Mosts entgegensetzt, wobei der Strom des Mosts durch die Umfangsöffnung (22) des Verteilers (10) auf die vertikale Wand (2) des Behälters (1) über der Oberfläche des Mosts projiziert wird.

11. Verfahren nach dem vorhergehenden Anspruch, **dadurch gekennzeichnet, dass** ein Volumen, das 5 bis 12 Mal dem Volumen des Mosts, der im Behälter enthalten ist, entspricht, im Umwälzkreislauf bei einer Stunde Sieden umgewälzt wird.

12. Verfahren nach irgendeinem der Ansprüche 10 und 11, **dadurch gekennzeichnet, dass** die Energie in einen Wärmetauscher (9, 13) eingeführt wird.

13. Verfahren nach dem vorhergehenden Anspruch, **dadurch gekennzeichnet, dass** die in den Wärmetauscher eingeführte Energie (9, 13) parametriert wird, um einen Verdampfungsgrad von maximal 12 % zu erhalten, der vorzugsweise zwischen 1 und 8 % liegt.

14. Verfahren nach irgendeinem der Ansprüche 10 bis 13, **dadurch gekennzeichnet, dass** der Most in einer Siedevorrichtung nach einem der Ansprüche, 1 bis 7 während einer Verweildauer gehalten wird, die zwischen 20 und 80 min., vorzugsweise zwischen 30 und 70 min. liegt.

## Claims

1. Device for the heat treatment of wort comprising a boiling vessel (1) containing a certain volume of wort, a forced wort recirculation circuit, the recirculation circuit comprising a vertical duct (8, 12) in the enclosure of the vessel (1) the upper part of which emerges above the surface of the wort, the device comprising above the vertical duct (8, 12) a distributor (10) with a circumferential opening (22), a wort flow being able to circulate upwards in the vertical duct (8, 12) and to be ejected into the vessel (1) by the circumferential opening (22); the device being **characterized in that** the distributor (10) comprises a floating part, called a float (17) capable of sliding along a vertical axis (16); the float (17) is subjected to upward pressure exerted by the wort, the device having a part (19) which exerts a downward back pressure on the float (17) in such a way that the dimension of the circumferential opening (22) is self-modifiable according to the operating conditions, without manual intervention nor taking measurements.

2. Device for the heat treatment of the wort according to the preceding claim, **characterized in that** the distributor (10) comprises a circular base (14) fixed at the upper end of the vertical duct (16) so that the circumferential opening (22) is arranged between the base (14) and the float (17).

3. Device for the heat treatment of the wort according to the preceding claim, **characterized in that** the base (14) has a curved upper face (15) over its entire circumference.

4. Device for the heat treatment of the wort according to any one of the preceding claims, **characterized in that** the float (17) has a curved underside (18) over its entire circumference.

5. Device for the heat treatment of the wort according to any one of claims 2 to 4, **characterized in that** the vessel (1) has a vertical wall (2), the curved faces (15, 18) of the float (17) and the base (14) being such that the flow of wort leaving the circumferential opening (22) falls on the vertical wall (2) of the vessel (1), above the surface of the wort.

6. Device for the heat treatment of the wort according to any one of the preceding claims, **characterized in that** the distributor (10) is surmounted by a spring (19) capable of exerting a pressure on the float (17), directed vertically downwards and opposing the pressure exerted by the upward flow on the float (17).

7. Device for the heat treatment of the wort according to any one of the preceding claims, **characterized in that** it comprises a heat exchanger, internal (13) or external (9).

8. Dispensing device (10) suitable to be introduced into a wort heat treatment device comprising a forced wort recirculation circuit, the dispensing device comprising a circular base (14), a central axis (16) passing through the center of that base (14), along which a circular part, called a float (17) is suitable for sliding, and whose underside (18) has a curved surface over the entire circumference, a circumferential opening is provided between the base (14) and the float (17); the float being subjected to upward pressure exerted by the wort; the dispensing device comprising a part (19) which exerts a downward back pressure on the float (17) in such a way that the dimension of the circumferential opening (22) is self-modifiable according to the operating conditions, without manual intervention nor taking measurements.

9. Dispensing device according to the preceding claim, **characterized in that** the upper face (15) of the circular base (14) has a curved surface over its entire circumference.

10. Process for the heat treatment of wort in a boiling vessel (1) comprising a vertical wall (2) and a forced wort recirculation circuit; the recirculation circuit comprising a vertical duct (8, 12) in the enclosure of the vessel (1) the upper part of which emerges above the surface of the wort, and is surmounted by a distributor (10) with a circumferential opening (22) and a float (17) capable of sliding along a vertical axis (16); the process being **characterized in that** a flow of wort flows upwards in the vertical duct (8, 12) and exerts an upward dynamic pressure on the float (17), the float being subjected to a downward back pressure which instantly opposes the dynamic pressure of the wort, the wort flow being ejected through the circumferential opening (22) of the distributor (10) on the vertical wall (2) of the vessel (1), above the surface of the wort.

11. Process according to the preceding claim **characterized in that** a volume equivalent to 5 to 12 times the volume of wort contained in the vessel, recirculates in the recirculation circuit over one hour of boiling.

12. Process according to any one of claims 10 and 11, **characterized in that** energy is introduced into a heat exchanger (9, 13).

13. Process according to the preceding claim, **characterized in that** the energy introduced into the heat exchanger (9, 13) is parameterized to obtain an evaporation rate of maximum 12%, preferably comprised between 1 and 8%.

14. Process according to any one of claims 10 to 13, **characterized in that** the wort is maintained in a boiling device according to any one of claims 1 to 7, for a residence time comprised between 20 and 80 min, preferably comprised between 30 and 70 min.
